## Europäisches Patentamt
## European Patent Office
## Office européen des brevets

(19)

(11) Numéro de publication: **0 078 758**
**B1**

(12) # FASCICULE DE BREVET EUROPÉEN

(45) Date de publication du fascicule du brevet:
**13.08.86**

(51) Int. Cl.⁴: **F 16 H 1/16,** F 16 K 31/54

(21) Numéro de dépôt: **82450016.9**

(22) Date de dépôt: **03.11.82**

(54) **Perfectionnements aux réducteurs de couple.**

(30) Priorité: **04.11.81 FR 8120772**

(43) Date de publication de la demande:
**11.05.83 Bulletin 83/19**

(45) Mention de la délivrance du brevet:
**13.08.86 Bulletin 86/33**

(84) Etats contractants désignés:
**BE DE GB IT NL**

(56) Documents cité:
**DE-A-2 133 237**
**GB-A-979 500**
**US-A-1 450 660**
**US-A-1 496 379**
**US-A-1 564 742**
**US-A-4 084 447**

(73) Titulaire: **LES TECHNIQUES NOUVELLES DES FLUIDES Société Anonyme, 4, rue Fernand Belliard, F-33100 Bordeaux Bastide (FR)**

(72) Inventeur: **Boivinet, Gérard, Parc Saint- Bris Les Chênes 1, F-33140 Villenave D'Ornon (FR)**
Inventeur: **Borde, Jean- Jack, 3, rue Eugène Delacroix, F-33150 Cenon (FR)**
Inventeur: **Poux, Jack, "Camelot", F-33141 Villegouge (FR)**

(74) Mandataire: **Thébault, Jean- Louis, Cabinet Jean-Louis Thébault 50, Cours de Verdun, F-33000 Bordeaux (FR)**

LIBER, STOCKHOLM 1986

## Description

La présente invention se rapporte aux réducteurs de couple à vis sans fin destinés notamment à la commande manuelle ou motorisée de vannes industrielles.

Ce type de réducteur comporte généralement une vis sans fin en prise avec, soit un secteur denté pour les réducteurs à fraction de tour, soit une roue dentée pour les réducteurs à tour complet. Les deux organes en prise ont leurs axes orthogonaux et sont maintenus en place par un boîtier ou enceinte constitué par deux pièces complémentaires assemblées entre elles par vis après mise en place à l'intérieur de la vis sans fin et du secteur ou de la roue. En outre, dans le cas d'un réducteur à fraction de tour, il est prévu un dispositif debutées destiné à délimiter le débattement angulaire du secteur et généralement constitué par deux vis disposées à la périphérie du boîtier et réglables de l'extérieur.

Les divers modes de réalisation connus de ces types de réducteurs différent essentiellement entre eux par la structure et la conformation des deux pièces constituant l'enceinte du réducteur.

Suivant un de ces modes de réalisation, ladite enceinte comporte un corps creux formant embase de fixation sur la vanne, par exemple, à actionner et un couvercle rapporté sur le corps du côté opposé à la vanne.

Suivant un autre mode de réalisation, l'enceinte comporte une embase en forme de bride de fixation et un corps creux en forme de cloche qui vient coiffer l'ensemble du mécanisme, ces deux pièces constituant solidairement une enceinte fermée à l'exclusion des deux ouvertures circulaires disposées dans l'axe de l'arbre commandé et servant de palier au moye creux de la roue dentée. Une telle disposition est illustrée par exemple par le document DE-A-2.133.237, qui révèle toutes les caractéristiques du préambule de la revendication 1. Dans une forme de réalisation particulière de ce dernier type de réducteur, le corps en forme de cloche vient directement se fixer sur la bride d'accouplement de la vanne.

Ces dispositifs présentent d'une manière générale des inconvénients, notamment au niveau des contraintes liées à l'axe de rotation du secteur ou de la roue.

En effet, au cours du fonctionnement, cet axe est le siège d'un effort présentant notamment une composante radiale équilibrée par la réaction du dispositif maintenant l'axe dudit secteur ou roue.

Dans les réducteurs évoqués ci-dessus, le secteur (ou la roue) se compose généralement d'un axe cylindrique creux venant s'emboîter sur la tige transmettant l'effort et d'une portion de disque (ou d'un disque) coaxiale audit axe et de configuration pratiquement symétrique par rapport à un plan perpendiculaire à l'axe du secteur (ou de la roue).

Dans ces conditions les montages adoptés comportent soit deux paliers, l'un solidaire de l'embase et l'autre solidaire, suivant le cas, soit du couvercle amovible, soit de l'enceinte en forme de cloche venant coiffer le mécanisme, comme illustré par exemple par le document DE-A-2.133.237 déjà cité. On peut envisager de supprimer l'un de ces paliers mais il convient alors de dimensionner largement le palier unique pour constituer un encastrement suffisant pour supporter le couple de flexion exercé par la composante radiale de l'effort appliqué au secteur (ou à la roue) du fait de l'existence d'un porte-à-faux. Cette disposition conduit en outre à accroître les frottements lors de la rotation.

Dans un cas comme dans l'autre il est nécessaire d'usiner les différents éléments, intrinsèquement et relativement les uns avec les autres, avec la précision requise pour tenir compte du porte-à-faux de l'axe sur son ou ses supports.

Une exception existe cependant aux systèmes mentionnés ci-dessus et concerne le type de réducteur dans lequel le corps de l'enceinte, en forme de cloche, vient se fixer directement sur la bride de la vanne. Dans ce cas, en effet, l'axe du secteur ne comporte qu'un seul palier situé du côté opposé à la vanne et le côté du secteur faisant face à cette dernière est maintenu par son emboîtement sur l'axe auquel doit être transmis l'effort de rotation.

Cette disposition, qui est par ailleurs de nature à desserrer les tolérances d'usinage requises dans les deux premiers cas cités plus haut, présente néanmoins des exigences propres.

La tige à laquelle doit être transmis l'effort devenant de fait l'axe de rotation du secteur, il est nécessaire de prévoir entre ces deux pièces des tolérances d'emboîtement aussi serrées que celles précédemment évoquées.

Par ailleurs, un tel montage implique un encastrement sans jeu sur le corps de la vanne de l'axe auquel est transmis le mouvement.

Or, tel n'est pas généralement le cas: il existe, en effet, des dispositions dans lesquelles la tige venant s'emboîter dans le secteur du réducteur n'est pas solidaire de l'axe de rotation de la vanne à laquelle elle se trouve liée par un simple système à tenon et mortaise ou tout autre système equivalent comportant un jeu important et interdisant l'utilisation de cette tige comme axe de rotation du secteur. Dans ces conditions, tout le système de tolérances précédemment exposé doit trouver place dans la conception du seul réducteur.

De plus, dans la conception actuelle des réducteurs de couple, l'indicateur de position se présente sous forme d'un simple disque plan comportant un index, ce qui implique un système complémentaire d'étanchéité aux intempéries prenant généralement la forme d'un joint placé au niveau du palier extérieur de l'axe du secteur.

D'une façon générale, toutes les structures actuellement utilisées conduisent à des usinages de précision pour les pièces constituantes et à des opérations de montage délicates ne facilitant pas par la suite les opérations de maintenance.

Le but de la présente invention est de supprimer ces inconvènients en proposant une nouvelle structure de montage de réducteurs de couple réduisant les opérations d'usinage precis, facilitant le montage des organes ainsi que les opérations de maintenance ultérieures.

Réducteur de couple du type comprenant une roue ou secteur denté solidaire en rotation d'un arbre à commander et comportant un moyeu creux relié à la denture périphérique, une vis sans fin mue manuellement ou par moteur en prise tangentiellement avec ladite denture et d'axe orthogonal à l'axe de ladite roue ou secteur et un boîtier ou enceinte enfermant les organes ci-dessus, ouverte du côté opposé à l'arbre commandé, l'ouverture étant obturée par un couvercle amovible et dont au moins une partie détermine des surfaces de paliers supportant l'axe de la roue ou secteur coaxialement audit arbre commandé, ledit reducteur étant caractérisé en ce que ledit moyeu creux est relié à la denture périphérique par l'intermèdiaire d'un voile conformé de manière à ménager entre le moyeu et la denture un espace annulaire dans lequel est disposé un palier unique de support et de centrage du moyeu formant partie intégrante du corps dudit boîtier, la résultante radiale de l'effort transmis par la vis à la roue ou secteur s'appliquant sensiblement dans la partie centrale dudit palier.

Cette disposition présente l'avantage substantiel d'éliminer tous couples de flexion du fait que la composante radiale de l'effort auquel la roue ou le secteur est soumis s'applique dans la partie centrale du palier.

Ce dernier peut donc être très sensiblement réduit en longueur ce qui facilite l'usinage et diminue d'autant les frottements.

Suivant une autre caractéristique, le réducteur selon l'invention comporte avantageusement un indicateur de rotation solidaire de la face externe dudit couvercle lequel est constitué par un disque sensiblement plan solidaire en rotation de la roue ou secteur, ledit corps de boîtier étant destiné à être rapporté sur le corps du dispositif commandé.

Le boîtier du réducteur ne comporte donc qu'une pièce principale qui est seule usinée, le couvercle étant un simple disque fermant l'ouverture du corps principal de manière étanche aux intempéries et permettant un accès direct et instantané à l'intérieur du réducteur pour assurer son entretien et sa vérification sans aucun démontage des organes essentiels du réducteur.

Par ailleurs, dans le cas d'un réducteur à fraction de tour, celui-ci peut être avantageusement muni de vis-butées réglables de limitation du débattement du secteur, portées par le secteur, côté couvercle, et coopérant avec des saillies fixes solidaires du corps de boîtier.

Ce système de réglage de la course du secteur est ainsi entièrement à l'intérieur du boîtier contrairement aux systèmes actuels et très facilement accessible par simple enlèvement du couvercle.

Le boîtier n'a plus à être usiné spécialement pour recevoir les vis-butées traditionnelles, le même boîtier pouvant être utilisé pour différents réducteurs à tour complet, ou à fraction de tour.

D'autres caractéristiques et avantages ressortiront de la description qui va suivre d'un mode de réalisation d'un réducteur selon l'invention, description donnée à titre d'exemple uniquement et en regard des dessins annexés sur lesquels:

- Fig.1 représente une vue en coupe suivant le plan médian du secteur d'un réducteur selon l'invention, et

- Fig. 2 représente une vue en coupe axiale suivant la ligne II-II du réducteur de la Fig. 1.

Le réducteur représenté sur les dessins est un réducteur à fraction de tour comprenant une vis sans fin 1 solidaire d'un axe 2 dont une extrémité 2a est clavetée sur un organe d'entraînement en rotation non représenté (un volant ou un moteur par exemple).

La vis 1 est en prise avec la denture 3 d'un secteur quart de tour 4 solidaire en rotation d'un arbre commandé 5 actionnant par exemple une vanne.

L'axe 2 et l'arbre 5 sont orthogonaux. Le secteur 4 est solidaire d'un moyeu cylindrique 6 claveté sur l'extrémité de l'arbre 5 et est constitué d'un voile 7 incliné sur l'axe du moyeu 6, formant partie intégrante de ce dernier et dont la partie périphérique constitue la denture 3.

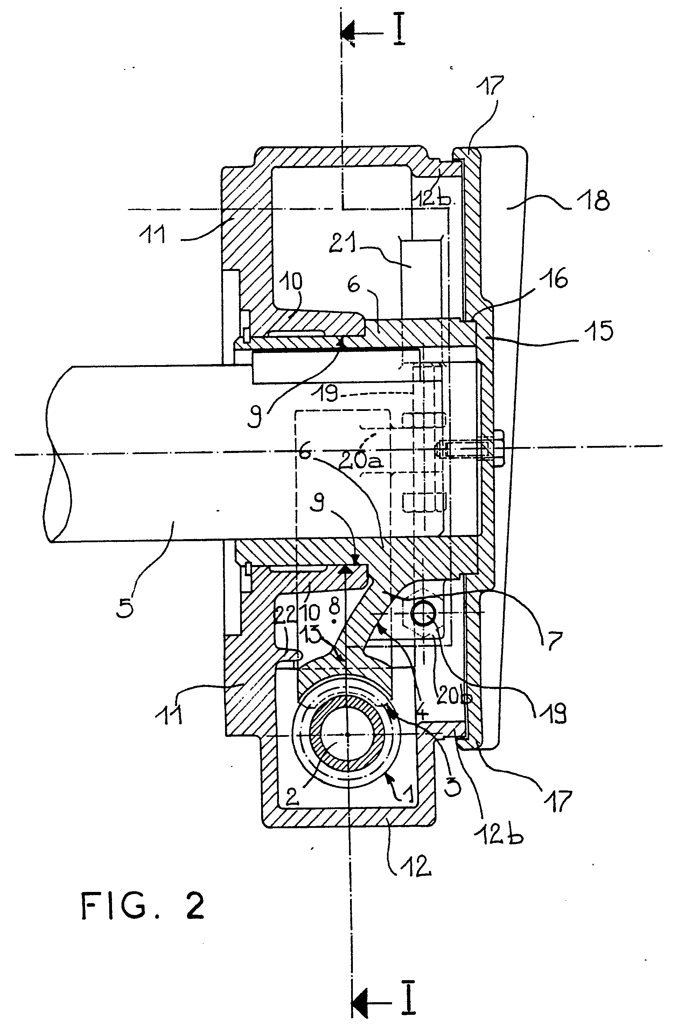

Comme on peut le constater sur la Fig. 2, le plan général du voile 7 est incliné d'une cinquantaine de degrés environ sur l'axe du moyeu 6, la jonction du voile 7 au moyeu 6 étant décalée par rapport au centre du moyeu. On ménage ainsi entre la denture 3 et le moyeu 6, sous le voile 7, un espace annulaire 8 en forme de coin dont l'intérêt fondamental apparaîtra plus loin.

Le moyeu 6 est supporté et centré par un palier unique 9 conformé sur un prolongement tubulaire 10 solidaire d'une embase 11 destinée à être rapportée et fixée par tous moyens appropriés sur un corps d'une vanne par exemple, commandé par l'arbre 5.

L'embase 11 est elle-même prolongée par une enveloppe externe 12 formant carter et constituant le corps principal de l'enceinte du réducteur.

Les parties 10, 11 et 12 sont bien entendu réalisées d'un seul bloc par moulage puis usinage.

La hauteur du corps principal 12 de ladite enceinte correspond sensiblement à celle du moyeu 6, cependant que la longueur du palier unique 9 est très faible en comparaison des longueurs du palier unique des réducteurs connus ou de la longueur cumulée des deux paliers disposés de part et d'autre du secteur d'autres types de réducteurs connus, comme il a été souligné plus haut.

Suivant une caractéristique essentielle du dispositif selon l'invention la partie centrale dudit palier 9 se trouve à l'aplomb de la composante normale 13 de l'effort transmis par la vis 1 au secteur 4 grâce à la possibilité de disposer le palier 9 dans l'espace annulaire en coin 8.

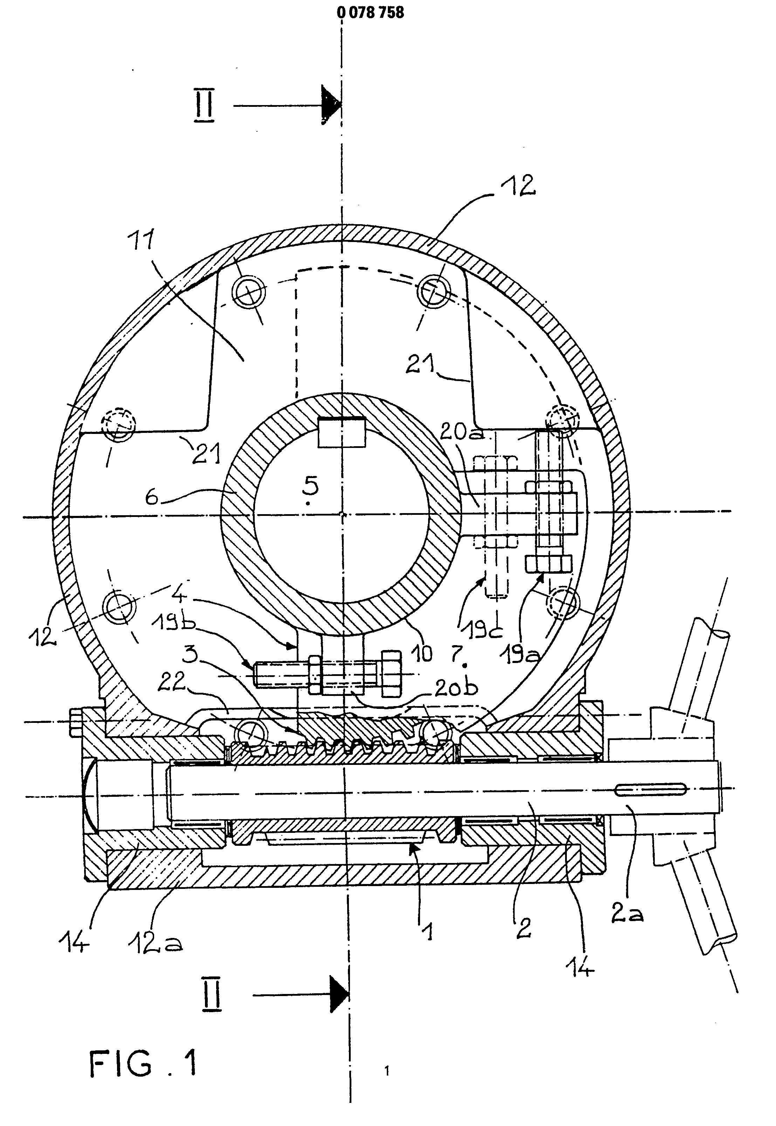

La vis 1 est maintenue et centrée dans un prolongement 12a (Fig. 1) du corps 12 à la manière classique à l'aide de manchons 14 à roulements à aiguilles rapportés et fixés sur ledit corps 12a.

Le corps 12 est ouvert du côté opposé à l'embase 11. A cet effet, il est prévu un rebord cylindrique 12b coaxial au moyeu 6.

L'orifice circulaire ainsi déterminé est obturé à l'aide d'un couvercle 15 sensiblement plan fixé de manière amovible en bout de l'arbre 5 par exemple.

Le couvercle 15 s'encastre grâce à un épaulement circulaire interne 16 sur l'extrémité du moyeu 6 cependant que le rebord périphérique du couvercle comporte un retour 17 épousant le rebord 12b afin de rendre le réducteur étanche aux poussières et intempéries. Un léger jeu subsiste néanmoins entre le couvercle 15 et le rebord fixe 12b pour ne pas entraver la rotation du couvercle 15 lequel porte sur sa face externe un indicateur de rotation 18, à la manière bien connue.

Le système de réglage du débattement angulaire du secteur 4 est constitué par deux vis-butées 19a et 19b montées réglables sur deux oreilles 20a et 20b solidaires du secteur 4 (côté couvercle 15) et décalées de 90° entre elles.

Ces vis-butées 19a, 19b coopèrent avec des saillies fixes 21 venues de moulage avec le corps principal 12 et disposées en consèquence à l'intérieur de l'enceinte.

Cette disposition des saillies 21 est d'ailleurs telle que le secteur quart de tour 4 pourrait être instantanément remplacé par un secteur demi-tour pourvu, dans sa partie centrale d'une oreille telle que l'oreille 20a portant une première vis-butée telle que 19a et une seconde vis-butée telle que la vis représentée en 19c disposée tête-bêche avec la première et assurant ainsi le débattement précis à 180° de ce dernier secteur.

Le réducteur représenté et décrit ci-dessus présente un certain nombre d'avantages sensibles par rapport aux réducteurs connus.

En premier lieu, du fait que la composante radiale 13 de l'effort auquel est soumis le secteur 4 en fonctionnement s'applique, grâce au déport latéral du voile 7, en une zone située entre les deux extrémités du palier unique 9, la longueur de ce dernier peut être notablement réduite puisqu'il n'y a plus d'effet de couple de flexion exercé sur ledit palier. Les frottements s'en trouvent réduits en consequence cependant que l'usinage du palier est moins important et également moins serré du fait de l'excellent équilibre des forces que l'on peut obtenir avec une telle disposition du palier.

D'un autre côté, dans un tel réducteur il n'y a qu'une seule pièce à usiner avec certaines tolérances, celle constituée par les parties 10, 11 et 12, laquelle pièce constitue par ailleurs la pièce essentielle de l'enceinte du réducteur, le couvercle 15 n'étant qu'un simple disque facilement enlevable même en cours de fonctionnement pour régler les vis-butées de débattement du secteur, pour vérifier l'intérieur du réducteur et assurer sa maintenance. Cette commodité d'emploi est très appréciable en regard des réducteurs traditionnels dont il faut démonter tout ou partie des organes essentiels pour la maintenance.

Le fait d'avoir une seule pièce à usiner pour l'assemblage des organes mobiles est particulièrement adapté aux techniques actuelles d'usinage sur machine à commande numérique.

Le réducteur selon l'invention présente également une hauteur réduite correspondant à la longueur du moyeu 6 sensiblement, laquelle peut être reduite au strict nécessaire pour assurer l'accouplement approprié avec l'arbre à commander 5.

Le montage des vis-butées réglables 19a, 19b, 19c à l'intérieur, sur le secteur 4, dispense d'usiner le carter du réducteur qui peut être standard et utilisé pour divers types de réducteurs (à tour complet, à quart de tour, à demi-tour, à fraction quelconque de tour).

Suivant une autre caractéristique on peut avantageusement prévoir une réserve de graissage pour la vis 1 en réalisant une nervure interne 22 de retenue solidaire de l'embase 11, au droit de la zone de contact entre la vis 1 et la denture 3, le réducteur étant disposé avec l'axe de son moyeu vertical au dessus de la vanne commandée. Cette nervure 22 assure également le rôle de raclette vis-à-vis du flanc de la denture 3 et confine la graisse dans sa zone d'utilisation.

La disposition particulière de la denture 3 par rapport au moyeu 6 s'applique aussi bien aux secteurs qu'aux roues dentées sur toute leur périphérie.

Le voile 7 peut avoir une autre conformation (section en L par exemple) dans la mesure où on réalise, entre la denture 3 et le moyeu 6, un espace annulaire permettant de loger le palier unique 9.

Il est à noter aussi que le secteur 4 pourrait être disposé en sens inverse sur l'extrémité de l'arbre 5 auquel cas le palier-support serait conformé sur un prolongement interne d'un corps d'enceinte rapporté sur une embase analogue à l'embase 11, ledit corps enveloppant les organes du réducteur à la manière du corps 12 et étant obturé au droit de l'extrémité de l'arbre 5 par un disque-couvercle analogue au couvercle 15 mais de diamètre réduit sensiblement au diamètre extérieur du moyeu 6.

Le réducteur selon l'invention sert à la commande de tout dispositif comportant un arbre dont la rotation doit être asservie, telle qu'une vanne industrielle par exemple, mais peut également constituer la partie essentielle d'un vérin mécanique.

Enfin, l'invention n'est evidemment pas limitée aux modes de réalisation représentés et décrits ci-dessus

**Revendications**

1. Réducteur de couple du type comprenant une roue ou secteur denté (4) solidaire en rotation d'un arbre à commander (5) et comportant un moyeu creux (6) relié à la denture périphérique (3), une vis sans fin (1) mue manuellement et d'axe orthogonal à l'axe de ladite roue ou secteur et un boîtier ou enceinte (10, 11, 12) enfermant les organes ci-dessus, ouverte du côté opposé à l'arbre commandé, l'ouverture une partie détermine des surfaces de paliers supportant l'axe de la roue ou secteur coaxialement audit arbre commandé, ledit réducteur étant <u>caractérisé en</u> ce que ledit moyeu creux (6) d'un voile (7) conformé de manière à ménager entre le moyeu et la denture un espace annulaire (8) dans lequel est disposé un palier unique (9) de support et de centrage du moyeu formant partie intégrante du corps dudit boîtier située tante radiale (13) de l'effort transmis par la vis (1) à la roue ou secteur (4) s'appliquant sensiblement dans la partie centrale dudit palier (9).

2. Réducteur de couple suivant la revendication 1, caractérisé en ce que l'ouverture du corps du boîtier située à l'opposé de l'arbre commandé est largement dimensionnée de manière à permettre l'accès au palier unique pour le montage de la roue ou du secteur (4) à l'intérieure de l'enceinte du corps de boîtier et ne participe pas au support et au centrage du moyeu creux et en ce que le couvercle amovible (15) destiné à obturer ladite ouverture est constitué par un disque sensiblement plat, fixé de manière à être solidaire en rotation du moyeu creux et comporte un indicateur de rotation (18) solidaire de sa face externe, ledit corps de boîtier (10, 11, 12) étant destiné à être rapporté sur le corps du dispositif commandé.

3. Réducteur de couple suivant la revendication 2, caractérisé en ce qu'il comporte un secteur denté (4) dont le débattement angulaire est réglé à l'aide de vis-butées (19<u>a</u>, 19b, 19c) portées par le secteur (côteé couvercle 15) et coopérant avec des saillies (21) fixes disposées intérieurement au boîtier et solidaires dudit corps de boîtier (12).

4. Réducteur de couple suivant l'une des revendications 1 à 3, caractérisé en ce que ledit corps de boîtier comporte une enveloppe externe (12) solidaire d'une embase (11) de fixation du réducteur, ladite embase étant prolongée intérieurement au réducteur par un manchon (10) sur la face interne duquel est usiné ledit palier unique (9).

5. Réducteur de couple suivant la revendication 4, caractérisé en ce que ledit couvercle (15) est constitué par un disque sensiblement plan encastré sur le rebord externe du moyeu (6) et fixé en bout de l'arbre commandé (5), le rebord périphérique (17) du disque recouvrant l'orifice (12b) d'accès à l'intérieur dudit corps de boîtier (12).

6. Réducteur de couple suivant la revendication 1, caractérisé en ce que ledit corps de boîtier (12) comporte une enveloppe externe solidaire d'une embase de fixation largement ouverte du côté de l'arbre commandé et dont la paroi externe comporte un prolongement intérieur tubulaire sur la face interne duquel est usiné ledit palier unique (9), le voile (7) du secteur ou roue étant déporté latéralement du côté opposé au dispositif commandé par ledit arbre (5).

7. Réducteur de couple suivant l'une des revendications 1 à 5, caractérisé en ce qu'il comporte au droit de la vis sans fin (1) une réserve de graissage délimitée par une nervure de retenue (22) formant partie intégrante de l'embase (11).

8. Réducteur de couple suivant l'une des revendications 1 à 7, caractérisé en ce que le voile (7) reliant le moyeu (6) à la denture (3) est incliné sur l'axe du moyeu (6).

**Patentansprüche**

1. Momentreduktionsgetriebe des Typs umfassend ein Zahnrad oder -segment (4), das drehfest mit einer Antriebswelle (5) ist und eine Hohlnabe (6), die mit der Umfangsverzahnung (3) verbunden ist, eine Schnecke (1), die manuell oder durch einen Motor in Tangentialeingriff mit der besagten Verzahnung beweglich ist und eine Achse senkrecht zur Achse des besagten Rades oder Segments aufweist, und ein Gehäuse oder Einschließung (10, 11, 12) aufweist, das die obigen Organe umschließend an der der Antriebswelle gegenüberliegenden Seite offen ist, wobei die Öffnung durch einen abnehmbaren Deckel (15) abgedeckt ist, und von dem wenigstens ein Abschnitt Lagerflächen bildet, die die Achse des Rades oder Segments koaxial zur Antriebswelle abstützen, wobei das Reduktionsgetriebe dadurch gekennzeichnet ist, daß die besagte Hohlnabe (6) mit der Umfangsverzahnung (3) unter Zwischenschaltung eines gekrümmten Abschnitts (7) verbundet ist, der derart gestaltet ist, daß zwischen der Nabe und der Verzahnung ein Ringraum (8) besteht, in dem ein einziges Stütz- und Zentrierlager (9) der Nabe angeordnet ist, das einstückig mit dem Körper des besagten Gehäuses ist, wobei die radiale Resultierende (13) der von der Schnecke (1) auf das Rad oder Segment (4) übertragenen Kraft im wesentlichen auf den zentralen Abschnitt des besagten Lagers (9) wirkt.

2. Momentreduktionsgetriebe gemäß Anspruch 1, dadurch gekennzeichnet, daß die Öffnung des Körpers des Gehäuses, die gegenüber von der Antriebswelle liegt, derart groß dimensioniert ist, daß der Zugang zum einzigen Lager für die Montage des Rades oder Segments (4) im Inneren der Umschließung des Körpers des Gehäuses ermöglicht wird, und nicht am Abstützen und Zentrieren der Hohlnabe teilnimmt, und daß der abnehmbare Deckel (15), der dazu bestimmt ist, die besagte Öffnung abzudecken, aus einer im wesentlichen flachen Scheibe gebildet wird, die derart befestigt ist, daß sie rotationsfest mit der Hohlnabe ist, und eine mit ihrer Außenseite fest verbundene Drehanzeige (18) umfaßt, wobei der besagte Körper des Gehäuses (10, 11, 12) dazu bestimmt ist, auf den Körper der Antriebsvorrichtung aufgesetzt zu werden.

3. Momentreduktionsgetriebe gemäß Anspruch 2, dadurch gekennzeichnet, daß es ein Zahnsegment (4) umfaßt, dessen Schwenkbewegung mittels Schraubenanschlägen (19a, 19b, 19c) eingestellt wird, die von dem Segment (auf der Seite des Deckels 15) getragen werden und mit Vorsprüngen (21), die im Inneren des Gehäuses und fest mit dem besagten Körper des Gehäuses (12) verbunden sind, zusammenarbeiten.

4. Momentreduktionsgetriebe gemäß einem der Ansprüche 1 bis 3, dadurch gekennzeichnet, daß der besagte Körper des Gehäuses einen Außenmantel (12) umfaßt, der fest mit einem Befestigungsabschnitt (11) des Reduktionsgetriebes verbunden ist, wobei der besagte Befestigungsabschnitt ins Innere des Reduktionsgetriebes durch einen Stutzen (10) verlängert ist, an dessen Innenfläche das besagte einzige Lager (9) ausgearbeitet ist.

5. Momentreduktionsgetriebe gemäß Anspruch 4, dadurch gekennzeichnet, daß der besagte Deckel (15) durch eine im wesentliche ebene, über den Außenrand der Nabe (6) fassende Scheibe gebildet und stirnseitig von der Antriebswelle (5) befestigt ist, wobei der Außenrand (17) der Scheibe die Zugangsöffnung (12b) zum Inneren des besagten Körpers des Gehäuses (12) abdeckt.

6. Momentreduktionsgetriebe gemäß Anspruch 1, dadurch gekennzeichnet, daß der besagte Körper des Gehäuses (12) einen Außenmantel aufweist, der fest mit einem Befestigungsabschnitt verbunden, antriebswellenseitig groß geöffnet ist und dessen Außenwandung eine röhrförmige innere Verlängerung aufweist, auf deren Innenfläche des besagte einzige Lager (9) ausgearbeitet ist, wobei der Abschnitt (7) des Segments oder Rades seitlich zur Seite gegenüber der durch die besagte Welle (5) angetriebenen Vorrichtung versetzt ist.

7. Momentreduktionsgetriebe gemäß einem der Ansprüche 1 bis 5, dadurch gekennzeichnet, daß es im Bereich der Schnecke (1) einen Schmiermittelvorrat aufweist, der durch eine Rückhalterippe (22) begrenzt wird, die einstückig mit dem Abschnitt (11) ausgebildet ist.

8. Momentreduktionsgetriebe gemäß einem der Ansprüche 1 bis 7, dadurch gekennzeichnet, daß der Abschnitt (7), der die Nabe (6) mit der Verzahnung (3) verbindet, zur Achse der Nabe (6) geneigt ist.

**Claims**

1. A torque reducer of the type comprising a toothed wheel or sector (4) which is rotationally engaged with a shaft to be controlled (5) and comprises a hollow hub (6) connected to the peripheral toothing (3), an endless screw (1) moved manually or by motor, engaging tangentially with said toothing and having an axis which is orthogonal to the axis of said wheel or sector and a box or chamber (10, 11, 12) enclosing the above-mentioned members which is open on the side opposing the controlled shaft, the opening being blocked by a removable cover (15), and of which at least a portion determines the surfaces of bearings supporting the axis of the wheel or sector coaxially to said controlled shaft, said reducer being characterised in that said hollow hub (6) is connected to the peripheral toothing (3) by means of a web (7) which is shaped so as to make between the hub and the toothing an annular space (8) in which there is arranged a single bearing (9) for supporting and centering the hub forming an integral part of the body of said box, the resulting radial line (13) of stress transmitted by the screw (1) to the wheel or sector (4) being applied substantially in the central portion of said bearing (9).

2. A torque reducer according to claim 1, characterised in that the opening of the body of the box situated opposite the controlled shaft is widely dimensioned so as to allow access to the single bearing for mounting of the wheel or sector (4) inside the chamber of the box body and does not participate in the supporting and centering of the hollow hub and in that the removable cover (15) intended to block said opening is constituted by a substantially flat disc which is fixed so as to be rotationally engaged with the hollow hub and comprises a rotation indicator (18) which is integral with its external face, said body of box (10, 11, 12) being intended to be placed on the body of the controlled device.

3. A torque reducer according to claim 2, characterised in that it comprises a toothed sector (4) of which the angular deflection is adjusted by means of adjusting screws (19a, 19b, 19c) borne by the sector (cover side 15) and cooperating with fixed projections (21) arranged inside the box and integral with said box body (12).

4. A torque reducer according to one of claims 1 to 3, characterised in that said box body comprises an external casing (12) which is integral with a base (11) for fixing of the reducer, said base being lengthened inside the reducer by a sleeve (10) on whose internal face said single bearing (9) is machined.

5. A torque reducer according to claim 4, characterised in that said cover (15) is constituted by a substantially flat disc fitted on the external rim of the hub (6) and fixed at the end of the controlled shaft (5), the peripheral rim (17) of the disc covering the orifice (12b) for access to the interior of said box body (12).

6. A torque reducer according to claim 1, characterised in that said box body (12) comprises an external casing integral with a fixing base which is widely open on the side of the controlled shaft and of which the external wall comprises a tubular internal extension on the internal face of which said single bearing (9) is machined, the web (7) of the sector or wheel being offset laterally on the side opposite the device controlled by said shaft (5).

7. A torque reducer according to one of claims 1 to 5, characterised in that it comprises, at right angles to the endless screw (1), a lubrication reserve defined by a holding rib (22) forming an integral part of the base (11).

8. A torque reducer according to one of claims 1 to 7, characterised in that the web (7) connecting the hub (6) to the toothing (3) is inclined to the axis of the hub (6).

7

0 078 758

II →

12

11

21

21

20a

6

5

4

19b

3

22

19c

10 7.

19a

2ob

14

12a

1

2

2a

14

II →

FIG.1

0 078 758

FIG. 2